# EUROPÄISCHE PATENTSCHRIFT

(11) **EP 1 228 931 B1**
(45) Veröffentlichungstag und Bekanntmachung des Hinweises auf die Patenterteilung: **04.10.2006**
(21) Anmeldenummer: 02000642.5
(22) Anmeldetag: 11.01.2002
(51) Int. Cl.: B60R 25/00, B60R 25/04, G07C 9/00

(54) **Verfahren zur Inbetriebnahme eines motorangetriebenen Kraftfahrzeugs**
Methode for starting an automobile
Procédé pour le démarrage d'un véhicule automobile

(30) Priorität: 03.02.2001 DE 10104856
(43) Veröffentlichungstag der Anmeldung: 07.08.2002
(73) Patentinhaber: Conti Temic microelectronic GmbH, 90411 Nürnberg (DE)
(72) Erfinder: Haas, Heinrich, 88074 Meckenbeuren (DE); Mörgelin, Matthias, 88048 Friedrichshafen (DE)

(56) Entgegenhaltungen:
- EP-A- 0 833 026
- EP-A- 0 980 800
- EP-A- 1 099 814
- EP-A- 1 107 354
- DE-A- 19 900 415
- DE-A- 19 926 234
- FR-A- 2 781 445

## Beschreibung

Die Inbetriebnahme motorangetriebener Kraftfahrzeuge umfaßt einerseits die Herstellung der Zugangsberechtigung zum Kraftfahrzeug (Schließvorgang, Öffnungsvorgang), andererseits die den Motorstartvorgang einschließende Herstellung der Fahrberechtigung für das Kraftfahrzeug. Zur Inbetriebnahme des motorangetriebenen Kraftfahrzeugs wurden üblicherweise Fahrzeugschlüssel verwendet, durch die die Türen des Kraftfahrzeugs und ein an der Lenksäule angebrachtes Zündschloß bedient werden; daneben werden heutzutage zur Inbetriebnahme in zunehmendem Maße auch elektronische Schlüssel verwendet, wobei codierte Signale zwischen dem elektronischen Schlüssel und dem motorangetriebenen Kraftfahrzeug übertragen werden, bsp. zum Entriegeln bzw. Verriegeln der Türschlösser oder zum Freischalten/Sperren eines Antriebssteuergeräts.
Bei den mittels elektronischer Schlüssel durchgeführten Vorgängen zur Inbetriebnahme des motorangetriebenen Kraftfahrzeugs - einerseits Zugangsberechtigung zum Kraftfahrzeug, andererseits Fahrberechtigung für das Kraftfahrzeug - sind in der Regel unterschiedliche Aktivitäten des Bedieners erforderlich und unterschiedliche zu erfüllende Bedingungen vorgesehen: bsp. darf die Fahrberechtigung nur dann zugestanden werden, wenn sich der elektronische Schlüssel innerhalb des Kraftfahrzeugs befindet; weiterhin sollten die Türen des Kraftfahrzeugs aus Sicherheitsgründen nur dann abgeschlossen werden dürfen, wenn sich der elektronische Schlüssel außerhalb des Kraftfahrzeugs befindet.
Aus der DE 198 46 803 C1 ist ein Verfahren zur Herstellung der Zugangsberechtigung zu einem motorangetriebenen Fahrzeug bekannt, bei dem eine bidirektionale Signalübertragung (bidirektionale Kommunikation) zwischen mindestens drei im oder am Fahrzeug fest angebrachten Übertragungseinheiten und dem vom Bediener mitgeführten elektronischen Schlüssel durchgeführt und die Signallaufzeit der zwischen der jeweiligen Übertragungseinheit und dem elektronischen Schlüssel bidirektional übertragenen Signale bestimmt wird. Die Entfernung zwischen den Übertragungseinheiten und dem elektronischen Schlüssel erhält man durch Auswertung dieser Signallaufzeit, d.h. durch Ermittlung der Zeitdifferenz zwischen dem von der jeweiligen Übertragungseinheit zum elektronischen Schlüssel gesendeten Signalen unter Berücksichtigung von Grenzwerten für die Signallaufzeit. Nachteilig hierbei ist, daß durch die Vielzahl der verwendeten Übertragungseinheiten ein hoher Aufwand und auch hohe Kosten verursacht werden.

Aus der DE 199 26 234 ist der Oberbegriff des Anspruchs 1 bekannt.

Der Erfindung liegt die Aufgabe zugrunde, ein Verfahren zur Inbetriebnahme eines motorangetriebenen Kraftfahrzeugs gemäß dem Oberbegriff des Patentanspruchs 1 anzugeben, bei dem die Inbetriebnahme für den berechtigten Bediener auf einfache Weise ermöglicht wird.
Diese Aufgabe wird erfindungsgemäß durch die Merkmale im Kennzeichen des Patentanspruchs 1 gelöst.
Vorteilhafte Ausgestaltungen des Verfahrens sind Bestandteil der weiteren Patentansprüche.

Beim vorgestellten Verfahren wird bei einem Bedienerwunsch zur Inbetriebnahme des motorangetriebenen Kraftfahrzeugs, d.h. beim Wunsch des Bedieners entweder zur Herstellung der Zugangsberechtigung zum Kraftfahrzeug mit der Durchführung eines Schließvorgangs oder Öffnungsvorgangs der Fahrzeugtüren oder zur Herstellung der Fahrberechtigung für das Kraftfahrzeug mit der Durchführung des Motorstartvorgangs, eine bidirektionale Signalübertragung (bidirektionale Kommunikation) zwischen einer im Kraftfahrzeug angeordneten Übertragungseinheit (vorzugsweise wird die Übertragungseinheit in der Mitte des Kraftfahrzeugs angeordnet, bsp. in der Mittelkonsole des Kraftfahrzeugs im Bereich der Armauflage) und dem vom Bediener mitzuführenden, für die handhabungsfreie Kommunikation vorgesehenen Authentikations-Geber (bsp. ein elektronischer Schlüssel mit oder ohne Schlüsselbart oder in Form einer Scheckkarte) durchgeführt, bei der die Sendeleistung (bzw. die Feldstärke) der von der Übertragungseinheit gesendeten Fahrzeugsignale variiert wird, d.h. je nach durchzuführendem Vorgang bei der Inbetriebnahme unterschiedlich gewählt wird. Die Entscheidung, ob der vom Bediener gewünschte Vorgang bei der Inbetriebnahme durchgeführt wird, hängt einerseits von der Positionierung des Authentikations-Gebers bezüglich des motorangetriebenen Kraftfahrzeugs ab (Unterscheidung zwischen Innenraum und Außenraum des motorangetriebenen Kraftfahrzeugs) und andererseits von der Authentifikation des Authentikations-Gebers; beide Kriterien werden anhand des Eintreffens und der Auswertung der Rückantwort vom Authentikations-Geber bewertet, d.h. durch Überprüfung, ob auf das von der Übertragungseinheit zum Authentikations-Geber gesendete Fahrzeugsignal ein vom Authentikations-Geber zurückgesendetes Schlüsselsignal als Echosignal bei der Übertragungseinheit eintrifft und welchen Code dieses Schlüsselsignal (Echosignal) aufweist.
Die Aktivierung der Datenübertragung von der Übertragungseinheit zum Authentikations-Geber erfolgt aufgrund des von einem Aktivierungselement generierten Ausgangssignals als Folge einer am oder im Kraftfahrzeug vorgenommenen, einen Bedienerwunsch signalisierenden Aktivität; als am oder im motorangetriebenen Kraftfahrzeug angeordnetes Aktivierungselement kann entweder ein vom Bediener (manuell) zu betätigendes Bedienelement oder Betätigungselement oder ein Aktor vorgesehen werden oder ein selbständig auf eine Aktion des Bedieners reagierender Sensor (bsp. ein Näherungssensor, der bei einer Annäherung des Bedieners an das motorangetriebene Kraftfahrzeug anspricht).
Eine Entscheidung über die Ausführung des vom Bediener gewünschten Vorgangs bei der Inbetriebnahme kann von der Übertragungseinheit und/oder von einer mit der Übertragungseinheit verbundenen Steuereinheit des motorangetriebenen Kraftfahrzeugs getroffen werden; diese Steuereinheit ist bsp. als Steuergerät des motorangetriebenen Kraftfahrzeugs ausgebildet oder kann in einer Steuereinheit des motorangetriebenen Kraftfahrzeugs integriert werden, bsp. in die mit der Übertragungseinheit verbundene elektronische Wegfahrsperre des motorangetriebenen Kraftfahrzeugs.

Bei der Inbetriebnahme des motorangetriebenen Kraftfahrzeugs können folgende Vorgänge unterschieden werden:
- Öffnungsvorgang der Fahrzeugtüren (Zutritt zum motorangetriebenen Kraftfahrzeug):
   Durch das Ausgangssignal eines als Aktor und/oder Sensor ausgebildeten Aktivierungselements wird die Übertragungseinheit des motorangetriebenen Kraftfahrzeugs aktiviert; bsp. durch das Ausgangssignal eines Näherungssensors (automatische Aktivierung der Übertragungseinheit bei einer Annäherung des Bedieners an das Kraftfahrzeug) und/oder durch das Ausgangssignal eines im Türgriff des Kraftfahrzeugs integrierten, bei einer Betätigung (beim Ziehen) des Türgriffs aktivierten Aktors (manuelle Aktivierung der Übertragungseinheit durch eine Betätigung des Bedieners am Kraftfahrzeug). Von der Übertragungseinheit wird nach ihrer Aktivierung ein erstes Fahrzeugsignal mit einer bestimmten Sendeleistung emittiert; die Sendeleistung des ersten Fahrzeugsignals wird so gewählt, daß auch der Außenbereich des motorangetriebenen Kraftfahrzeugs erfaßt wird, d.h. ein bestimmter Bereich um das motorangetriebene Kraftfahrzeug herum, bsp. der Bereich von 2 m um das Kraftfahrzeug herum. Befindet sich der Authentikations-Geber innerhalb der durch die Sendeleistung bestimmten Reichweite des ersten Fahrzeugsignals, werden nach einer durch den Authentikations-Geber an die Übertragungseinheit vorgenommenen Rückmeldung mittels eines ersten Schlüsselsignals als Echosignal (bidirektionale Authentifikations-Verfahren zwischen Authentikations-Geber und Übertragungseinheit, bsp. in Form eines challenge and response" - Verfahrens) bei einem als gültig identifizierten Authentikations-Geber die Fahrzeugtüren entriegelt.
- Herstellung der Fahrberechtigung für das motorangetriebene Kraftfahrzeug (Durchführung des Motorstartvorgangs):
   Durch Betätigung eines im Innenraum des motorangetriebenen Kraftfahrzeugs (bsp. am oder in der Nähe des Armaturenbretts) angeordneten Betätigungselements als Aktivierungselement (bsp. eines Tasters als Start-Stop-Taster oder eines Drehknopfs) zum Initiieren des Motorstartvorgangs wird ein Ausgangssignal generiert und hierdurch die Übertragungseinheit des motorangetriebenen Kraftfahrzeugs aktiviert. Von der Übertragungseinheit wird nach ihrer Aktivierung ein zweites Fahrzeugsignal mit einer bestimmten Sendeleistung emittiert; die Sendeleistung des zweiten Fahrzeugsignals wird so gewählt, daß nur der Innenbereich des motorangetriebenen Kraftfahrzeugs erfaßt wird, d.h. nur der Bereich innerhalb des Kraftfahrzeugs. Befindet sich der Authentikations-Geber innerhalb der durch die Sendeleistung bestimmten Reichweite des zweiten Fahrzeugsignals, wird unter Verwendung eines zweiten Schlüsselsignals als Echosignal ein (bidirektionales) Authentifikations-Verfahren zwischen Authentikations-Geber und Übertragungseinheit durchgeführt (bsp. in Form eines challenge and response" - Verfahrens); bei einem als gültig identifizierten Authentikations-Geber wird die Verriegelung der elektronischen Wegfahrsperre des Kraftfahrzeugs deaktiviert und somit der Motorstart des Kraftfahrzeugs zugelassen (beim Abstellen des Motors des Kraftfahrzeugs wird die elektronische Wegfahrsperre des Kraftfahrzeugs wieder aktiviert).
- Schließvorgang der Fahrzeugtüren (Verlassen des Kraftfahrzeugs):
   Anhand des Ausgangssignals eines als Aktor oder Sensor oder als Betätigungselement ausgebildeten Aktivierungselements wird erkannt, daß das Kraftfahrzeug verschlossen werden soll, wodurch die Übertragungseinheit des Kraftfahrzeugs aktiviert wird; bsp. durch das Ausgangssignal eines Näherungssensors (automatische Aktivierung der Übertragungseinheit beim Entfernen des Bedieners vom Kraftfahrzeug) und/oder durch das Ausgangssignal eines in der Fahrzeugtüre integrierten Türkontakts (automatische Aktivierung der Übertragungseinheit beim Öffnen und/oder Wiederschließen der Fahrzeugtüre) oder durch das Ausgangssignal eines im oder am Türgriff einer Fahrzeugtüre des Kraftfahrzeugs integrierten Tasters (einer Verriegelungstaste) als Betätigungselement (manuelle Aktivierung der Übertragungseinheit durch Betätigung des Tasters seitens des Bedieners). Von der Übertragungseinheit werden nach ihrer Aktivierung zwei zeitlich aufeinanderfolgende Fahrzeugsignale in einer beliebigen Reihenfolge emittiert, ein drittes Fahrzeugsignal mit einer bestimmten Sendeleistung, wobei die Sendeleistung des dritten Fahrzeugsignals (bsp. ist diese so groß wie die Sendeleistung des ersten Fahrzeugsignals) so gewählt wird, daß auch der Außenbereich des motorangetriebenen Kraftfahrzeugs erfaßt wird, d.h. ein bestimmter Bereich um das motorangetriebene Kraftfahrzeug herum, bsp. der Bereich von bis zu 2 m um das motorangetriebene Kraftfahrzeug herum, und ein viertes Fahrzeugsignal mit einer bestimmten Sendeleistung, wobei die Sendeleistung des vierten Fahrzeugsignals geringer als die Sendeleistung des dritten Fahrzeugsignals, aber größer als die Sendeleistung des zweiten Fahrzeugsignals und so gewählt wird, daß nur der Innenbereich des motorangetriebenen Kraftfahrzeugs erfaßt wird. Die Türen des motorangetriebenen Kraftfahrzeugs können nur dann verriegelt werden, wenn bei der Übertragungseinheit einerseits ein drittes Schlüsselsignal (Echosignal) als Rückmeldung des Authentikations-Gebers aufgrund des dritten Fahrzeugsignals eintrifft und andererseits kein Schlüsselsignal (Echosignal) vom Authentikations-Geber aufgrund des vierten Fahrzeugsignals eintrifft; d.h. der Authentikations-Geber befindet sich innerhalb der durch die Sendeleistung bestimmten Reichweite des dritten Fahrzeugsignals, aber außerhalb der durch die Sendeleistung bestimmten Reichweite des vierten Fahrzeugsignals. Hieraus folgt, daß der Bediener das motorangetriebene Kraftfahrzeug verlassen hat und sich der Authentikations-Geber außerhalb des motorangetriebenen Kraftfahrzeugs befindet (also sich nicht innerhalb des motorangetriebenen Kraftfahrzeugs aufhält). Anhand des vom Authentikations-Geber an die Übertragungseinheit übertragenen Schlüsselsignals wird ein bidirektionales Authentifikations-Verfahren zwischen Authentikations-Geber und Übertragungseinheit durchgeführt (bsp. in Form eines challenge and response" - Verfahrens); bei einem als gültig identifizierten Authentikations-Geber werden die Fahrzeugtüren verschlossen (verriegelt).

Die bidirektionale Kommunikation zwischen der Übertragungseinheit des motorangetriebenen Kraftfahrzeugs und dem Authentikations-Geber kann auf induktivem Wege, bsp. im Frequenzbereich von 20 kHz bis 125 kHz, und/oder durch Funkübertragung, bsp. im Frequenzbereich von 315 MHz bis 77 GHz, erfolgen. Der Authentikations-Geber kann vom Bediener auf beliebige Weise mitgeführt werden, insbesondere als bewegliche Einsteckkarte (Scheckkarte) oder in Form eines Schlüsselanhängers. Weiterhin können im motorangetriebenen Kraftfahrzeug Vorrichtungen zur Aufnahme eines mechanischen Notschlüssels vorgesehen werden (bsp. in den Fahrzeugtüren und im Zündschloß), so daß hiermit eine Inbetriebnahme des motorangetriebenen Kraftfahrzeugs in Ausnahmefällen durchgeführt werden kann.
Beim vorgestellten Verfahren ist eine komfortable und sichere Inbetriebnahme des motorangetriebenen Kraftfahrzeugs handhabungsfrei (ohne das Erfordernis einen mechanischen Schlüssel handzuhaben) bei hoher Diebstahlsicherheit auf einfache und kostengünstige Weise möglich. Der Aufwand (insbesondere zur Verbindung der zur Realisierung des Verfahrens vorgesehenen Komponenten des motorangetriebenen Kraftfahrzeugs) kann gering gehalten werden, da nur eine Übertragungseinheit im motorangetriebenen Kraftfahrzeug vorgesehen ist, deren Ansteuerung vorzugsweise von einer bereits im motorangetriebenen Kraftfahrzeug vorhandenen Komponente vorgenommen werden kann, bsp. von einem Steuergerät des motorangetriebenen Kraftfahrzeugs, bsp. von einem ins elektronische Zündschloß oder in die Wegfahrsperre des motorangetriebenen Kraftfahrzeugs integrierten Steuergeräts.

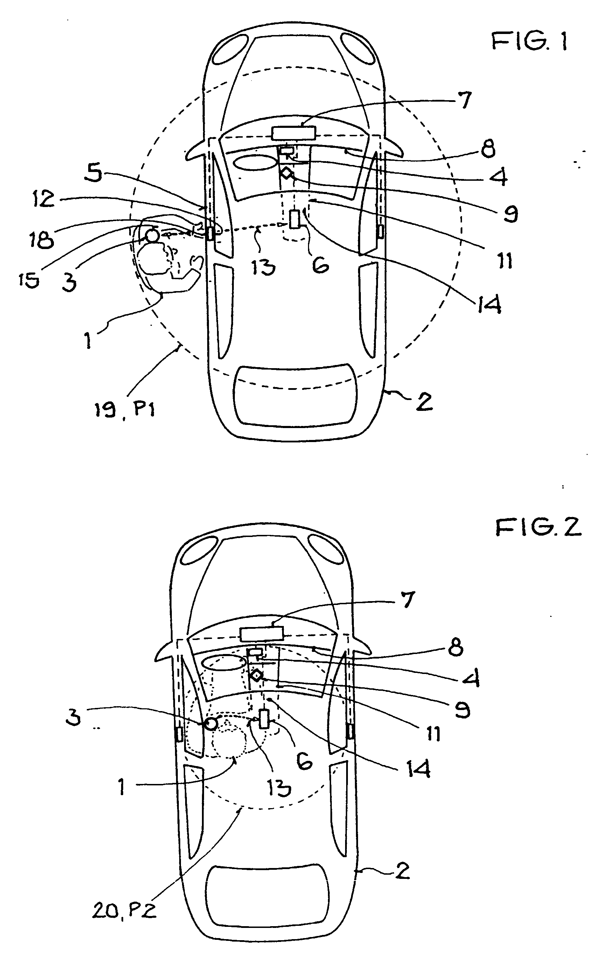

Im Zusammenhang mit der Zeichnung (Figuren 1 bis 3) soll das Verfahren zur Inbetriebnahme des motorangetriebenen Kraftfahrzeugs weiter erläutert werden.
Gemäß den Figuren 1 bis 3 sind für die Inbetriebnahme des motorangetriebenen Kraftfahrzeugs folgende Komponenten vorgesehen:
- ein vom Bediener 1 des motorangetriebenen Kraftfahrzeugs 2 bsp. in der Bekleidung 15 mitzuführender, batteriebetriebener elektronischer Schlüssel als Authentikations-Geber 3 (bsp. eine Scheckkarte oder ein bartloser Schlüssel in Form eines Schlüsselanhängers); an diesem als handhabungsfreies Authentifikationselement fungierenden Authentikations-Geber 3 muß der Bediener 1 des motorangetriebenen Kraftfahrzeugs 2 keinerlei manuelle Aktionen zur Authentifikation durchführen.
- eine in der Mitte des motorangetriebenen Kraftfahrzeugs 2 angeordnete Antenne als Übertragungseinheit (Sende-/Empfangseinheit) 6, über die die (bidirektionale) Kommunikation mit dem handhabungsfreien Authentikations-Geber 3 mittels Funkübertragung auf der Übertragungsstrecke 13 durchgeführt wird (Frequenz bsp. 433 MHz); diese Antenne als Übertragungseinheit 6 ist bsp. im Bereich der Mittelkonsole 11 des motorangetriebenen Kraftfahrzeugs 2 angeordnet, bsp. in der Armauflage 14.
- eine mit der Antenne als Übertragungseinheit 6 (Sende-/Empfangseinheit) in Verbindung stehende Steuereinheit 7 zur Ansteuerung der Übertragungseinheit 6 (Sende-/Empfangseinheit) 6; diese Steuereinheit 7 ist bsp. in der elektronischen Lenkungsverriegelung angeordneten elektronischen Wegfahrsperre des motorangetriebenen Kraftfahrzeugs 2 integriert.
- in den Türgriffen 18 der Fahrzeugtüren 5 mindestens ein Aktivierungselement 12 zur Aktivierung der Kommunikation zwischen dem Authentikations-Geber 3 und der Übertragungseinheit (Sende-/Empfangseinheit) 6 beim Zutritt zum motorangetriebenen Kraftfahrzeug 2 und mindestens ein weiteres Aktivierungselement 16 zur Aktivierung der Kommunikation zwischen dem Authentikations-Geber 3 und der Übertragungseinheit (Sende-/Empfangseinheit) 6 zum Verriegeln des motorangetriebenen Kraftfahrzeugs 2.
- mindestens ein vom Bediener 1 des motorangetriebenen Kraftfahrzeugs 2 zu betätigendes Betätigungselement als Aktivierungselement 4 zur Aktivierung der Kommunikation zwischen dem Authentikations-Geber 3 und der Übertragungseinheit (Sende-/Empfangseinheit) 6 bei der Herstellung der Fahrberechtigung für das motorangetriebene Kraftfahrzeug 2; insbesondere ist als Aktivierungselement 4 bsp. ein Start-Stop-Taster vorgesehen, der bsp. am Armaturenbrett 8 des motorangetriebenen Kraftfahrzeugs 2 oder im Schaltknauf des Ganghebels des motorangetriebenen Kraftfahrzeugs 2 angeordnet ist.
- ein vom Bediener 1 des motorangetriebenen Kraftfahrzeugs 2 mitzuführender (mechanischer) Notschlüssel 10, mit dem in Ausnahmefällen (Notfällen) ein Öffnungsvorgang bzw. Schließvorgang der Fahrzeugtüren 5 und ein Motorstart des motorangetriebenen Kraftfahrzeugs 2 vorgenommen werden kann; bsp. dann, wenn keine Kommunikation (Datenübertragung) zwischen dem Authentikations-Geber 3 und der Übertragungseinheit 6 (Sende-/Empfangseinheit) des motorangetriebenen Kraftfahrzeug 2 möglich ist, bsp. im Bereich starker Funkstörungen oder bei leerer Batterie des Authentikations-Gebers 3.
- eine Aufnahmevorrichtung 9 im Kraftfahrzeug 2 zur Aufnahme des (mechanischen) Notschlüssels 10; bsp. ist diese Aufnahmevorrichtung 9 im elektronischen Zündschloß des motorangetriebenen Kraftfahrzeugs 2 vorgesehen.

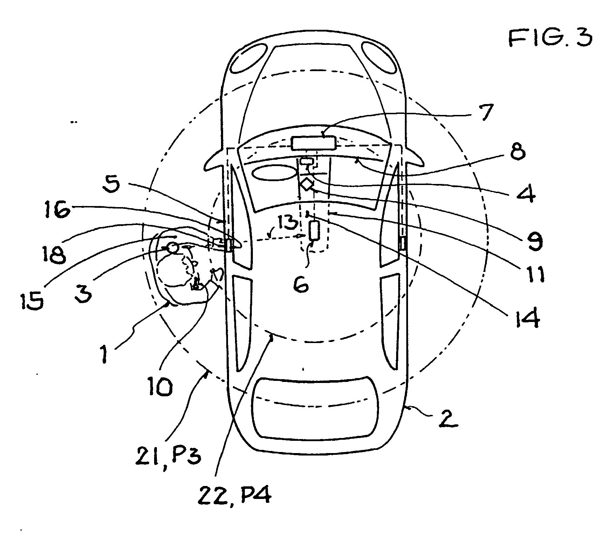

Gemäß Figur 1 muß für den Zutritt zum motorangetriebenen Kraftfahrzeug 2, d.h. den Öffnungsvorgang der Fahrzeugtüren 5, der elektronische Schlüssel als Authentikations-Geber 3 (bsp. eine Scheckkarte oder ein bartloser Schlüssel) vom Bediener 1 des motorangetriebenen Kraftfahrzeugs 2 in die Nähe des motorangetriebenen Kraftfahrzeugs 2 gebracht werden (bsp. wird der Authentikations-Geber 3 vom Bediener 1 des motorangetriebenen Kraftfahrzeugs 2 in der Bekleidung 15 mitgeführt) und einer der in den Türgriffen 18 der Fahrzeugtüren 5 angeordneten Türgriffschalter 12 als Aktivierungselemente durch Ziehen des Türgriffs 18 betätigt werden. Hiermit wird die bidirektionale Kommunikation zwischen der Antenne 6 des motorangetriebenen Kraftfahrzeugs 2 und dem Authentikations-Geber 3 auf der Übertragungsstrecke 13 initiiert, bsp. auf der Grundlage eines challenge-and-response Verfahrens: von der Antenne 6 wird ein Anforderungssignal als erstes Fahrzeugsignal zum Authentikations-Geber 3 mit einer Sendeleistung P1 auf der Übertragungsstrecke 13 übermittelt, so daß durch das erste Fahrzeugsignal ein bestimmter Bereich 19 um das motorangetriebene Kraftfahrzeug 2 herum erfaßt wird (Außenbereich), bsp. ein Bereich 19 von 2 m um das motorangetriebene Kraftfahrzeug 2 herum; befindet sich der Authentikations-Geber 3 innerhalb der durch die Reichweite des ersten Fahrzeugsignals erfaßten Bereichs 19, wird zur Authentifikation der elektronische Code (Authentikationscode mit einem variablen Wert) des Authentikations-Gebers 3 auf der Übertragungsstrecke 13 über die Antenne 6 zur in der elektronischen Wegfahrsperre des motorangetriebenen Kraftfahrzeugs 2 integrierten Steuereinheit 7 übertragen und von dieser ausgewertet. Ist der Authentikations-Geber 3 als gültig identifiziert, d.h. falls die Authentifikation positiv verläuft (Übereinstimmung des elektronischen Codes des Authentikations-Gebers 3 mit dem in der elektronischen Wegfahrsperre 7 gespeicherten Code), werden die Fahrzeugtüren 5 geöffnet.
Gemäß Figur 2 muß für die Durchführung des Motorstartvorgangs, d.h. die Herstellung der Fahrberechtigung, ein bsp. am Armaturenbrett 8 des motorangetriebenen Kraftfahrzeugs 2 angeordnetes Betätigungselement 4 als Aktivierungselement, bsp. ein Start-Stop-Taster, betätigt werden. Hiermit wird die bidirektionale Kommunikation zwischen der Antenne 6 des motorangetriebenen Kraftfahrzeugs 2 und dem Authentikations-Geber 3 auf der Übertragungsstrecke 13 initiiert (bsp. erfolgt dies mit dem gleichen Verfahren wie beim Zutritt zum motorangetriebenen Kraftfahrzeug 2, bsp. auf der Grundlage des dort angewandten challenge-and-response Verfahrens): von der Antenne 6 wird ein Anforderungssignal als zweites Fahrzeugsignal zum Authentikations-Geber 3 mit einer Sendeleistung P2 auf der Übertragungsstrecke 13 übermittelt, so daß durch das zweite Fahrzeugsignal nur der Bereich 20 innerhalb des motorangetriebenen Kraftfahrzeugs 2 erfaßt wird (Innenbereich); befindet sich der Authentikations-Geber 3 innerhalb der durch die Reichweite des zweiten Fahrzeugsignals erfaßten Bereichs 20 (d.h. im Innern des motorangetriebenen Kraftfahrzeugs 2) wird zur Authentifikation der elektronische Code (Authentikationscode mit einem variablen Wert) des Authentikations-Gebers 3 auf der Übertragungsstrecke 13 über die Antenne 6 zur in der elektronischen Wegfahrsperre des motorangetriebenen Kraftfahrzeugs 2 integrierten Steuereinheit 7 übertragen und von dieser ausgewertet. Ist der Authentikations-Geber 3 als gültig identifiziert, d.h. falls die Authentifikation positiv verläuft (Übereinstimmung des elektronischen Codes des Authentikations-Gebers 3 mit dem in der elektronischen Wegfahrsperre 7 gespeicherten Code), wird die elektronische Wegfahrsperre 7 deaktiviert. Der Motorstart (das Anlassen des Motors) wird dann vorgenommen, wenn der Leerlauf eingelegt oder die Kupplung des motorangetriebenen Kraftfahrzeugs 2 betätigt ist. Bei einer erneuten Betätigung des Betätigungselements 4 (Start-Stop-Tasters) wird der Motor des motorangetriebenen Kraftfahrzeugs 2 wieder abgeschaltet und die elektronische Wegfahrsperre 7 aktiviert; Voraussetzung hierfür ist, daß das motorangetriebene Kraftfahrzeug 2 steht (die Geschwindigkeit des motorangetriebenen Kraftfahrzeugs 2 muß 0 sein).
Gemäß Figur 3 muß für das Verlassen des motorangetriebenen Kraftfahrzeugs 2, d.h. den Schließvorgang der Fahrzeugtüren 5, sich einerseits der Bediener 1 des motorangetriebenen Kraftfahrzeugs 2 und anderseits der elektronische Schlüssel als Authentikations-Geber 3 außerhalb des motorangetriebenen Kraftfahrzeugs 2 befinden; demzufolge sollte der Bediener 1 seinen Willen zum Verlassen des motorangetriebenen Kraftfahrzeugs 2 erkennbar gemacht haben und der elektronische Schlüssel als Authentikations-Geber 3 außerhalb des motorangetriebenen Kraftfahrzeugs 2 gebracht werden (insbesondere trifft dies dann zu, wenn der Authentikations-Geber 3 vom Bediener 1 des motorangetriebenen Kraftfahrzeugs 2 beim Verlassen des motorangetriebenen Kraftfahrzeugs 2 in der Bekleidung 15 mitgeführt wird). Bsp. wird der Wunsch des Bedieners 1 zum Verlassen des motorangetriebenen Kraftfahrzeugs 2 durch Betätigung eines als im Türgriff 18 des motorangetriebenen Kraftfahrzeugs 2 integrierten Tasters 16 als Aktivierungselement geäußert. Hiermit wird die bidirektionale Kommunikation zwischen der Antenne 6 des motorangetriebenen Kraftfahrzeugs 2 und dem Authentikations-Geber 3 auf der Übertragungsstrecke 13 initiiert, bsp. auf der Grundlage eines challenge-and-response Verfahrens: von der Antenne 6 wird ein Anforderungssignal als drittes Fahrzeugsignal zum Authentikations-Geber 3 mit einer Sendeleistung P3 (Sendeleistung P3 bsp. gleich groß wie Sendeleistung P1) auf der Übertragungsstrecke 13 übermittelt, so daß durch das dritte Fahrzeugsignal ein bestimmter Bereich 21 um das motorangetriebene Kraftfahrzeug 2 herum erfaßt wird (Außenbereich), bsp. ein Bereich 21 von 2 m um das Kraftfahrzeug 2 herum und ein Anforderungssignal als viertes Fahrzeugsignal zum Authentikations-Geber 3 mit einer Sendeleistung P4 auf der Übertragungsstrecke 13 übermittelt; befindet sich der Authentikations-Geber 3 innerhalb der durch die Reichweite des dritten Fahrzeugsignals erfaßten Bereichs 21 und außerhalb des durch die Reichweite des vierten Fahrzeugsignals erfaßten Bereichs 22 (der Authentikations-Geber 3 befindet sich demnach bei der Betätigung des Tasters 16 als Aktivierungselement außerhalb des motorangetriebenen Kraftfahrzeugs 2), wird zur Authentifikation der elektronische Code (Authentikationscode mit einem variablen Wert) des Authentikations-Gebers 3 auf der Übertragungsstrecke 13 über die Antenne 6 zur in der elektronischen Wegfahrsperre des motorangetriebenen Kraftfahrzeugs 2 integrierten Steuereinheit 7 übertragen und von dieser ausgewertet. Ist der Authentikations-Geber 3 als gültig identifiziert, d.h. falls die Authentifikation positiv verläuft (Übereinstimmung des elektronischen Codes des Authentikations-Gebers 3 mit dem in der elektronischen Wegfahrsperre 7 gespeicherten Code), werden die Fahrzeugtüren 5 verschlossen (verriegelt).

## Patentansprüche

1. Verfahren zur Inbetriebnahme eines motorangetriebenen Kraftfahrzeugs (2), bei der mindestens ein Vorgang unter Verwendung einer bidirektionalen Signalübertragung von codierten Übertragungssignalen (FS, SS) zwischen dem motorangetriebenen Kraftfahrzeug (2) und einem vom Bediener (1) des motorangetriebenen Kraftfahrzeugs (2) mitgeführten Authentikations-Geber (3) durchgeführt wird, wobei
bei einem Bedienerwunsch zur Durchführung eines Vorgangs bei der Inbetriebnahme
a) die Signalübertragung durch das Ausgangssignal eines im oder am motorangetriebenen Kraftfahrzeug (2) angeordneten Aktivierungselements (4, 12, 16) aktiviert wird,
b1) nach der Aktivierung der Signalübertragung von einer im Kraftfahrzeug (2) angeordneten Übertragungseinheit (6) mindestens ein Fahrzeugsignal ausgesendet wird,
c) anhand der vom Authentikations-Geber (3) zur Übertragungseinheit (6) zurückgesendeten Echosignale als Schlüsselsignale die Position des Authentikations-Gebers (3) bezüglich des motorangetriebenen Kraftfahrzeugs (2) bestimmt
und eine Authentifikation vorgenommen wird,
dieses Verfahren ist **dadurch gekennzeichnet, daß**
b2) das Fahzeugsignal mit einer vom durchzuführenden Vorgang abhängigen Sendeleistung (P1, P2, P3, P4) ausgesendet wird, und daß
d) der durchzuführende Vorgang ausgeführt wird, wenn die Position des Authentikations-Gebers (3) vorgegebenen Kriterien entspricht und die Authentifikation des Authentikations-Gebers (3) erfolgreich vorgenommen wurde.

2. Verfahren nach Anspruch 1, **dadurch gekennzeichnet, daß** durch die Sendeleistung (P1, P2, P3, P4) des mindestens einen Fahrzeugsignals zulässige Bereiche (19, 20, 21, 22) für die Position des Authentikations-Gebers (3) bezüglich des motorangetriebenen Kraftfahrzeugs (2) festgelegt werden.

3. Verfahren nach Anspruch 1 oder 2, **dadurch gekennzeichnet, daß** die Entscheidung über die Ausführung des durchzuführenden Vorgangs von der Übertragungseinheit (6) und/oder von einer mit der Übertragungseinheit (6) verbundenen Steuereinheit (7) vorgenommen wird.

4. Verfahren nach Anspruch 3, **dadurch gekennzeichnet, daß** die Entscheidung über die Ausführung des durchzuführenden Vorgangs von einer mit der Übertragungseinheit (6) verbundenen elektronischen Wegfahrsperre (7) vorgenommen wird.

5. Verfahren nach einem der Ansprüche 1 bis 4, **dadurch gekennzeichnet, daß** das Ausgangssignal des Aktivierungselements durch eine am oder im Fahrzeug (1) erfolgende, einen Bedienerwunsch signalisierende Aktivität initiiert wird.

6. Verfahren nach einem der Ansprüche 1 bis 5, **dadurch gekennzeichnet, daß** die bidirektionale Signalübertragung zwischen der Übertragungseinheit (6) und dem Authentikations-Geber (3) über eine Funkübertragungsstrecke (13) erfolgt.

7. Verfahren nach einem der Ansprüche 1 bis 6, **dadurch gekennzeichnet, daß** beim Zutritt zum motorangetriebenen Kraftfahrzeug (2) nach der Aktivierung der Signalübertragung von der Übertragungseinheit (6) ein erstes, den Außenbereich (19) des motorangetriebenen Kraftfahrzeugs (2) erfassendes Fahrzeugsignal mit einer bestimmten Sendeleistung (P1) ausgesendet wird, und daß ein Öffnungsvorgang der Fahrzeugtüren (5) durchgeführt wird, wenn ein vom Authentikations-Geber (3) zurückgesendetes Echosignal als Schlüsselsignal in der Übertragungseinheit (6) eintrifft und authentifiziert wurde.

8. Verfahren nach Anspruch 7, **dadurch gekennzeichnet, daß** die Aktivierung der Signalübertragung durch die Betätigung des Türgriffs (18) einer Fahrzeugtüre (5) erfolgt.

9. Verfahren nach Anspruch 7, **dadurch gekennzeichnet, daß** die Aktivierung der Signalübertragung bei der Annäherung des Bedieners (1) an das motorangetriebene Kraftfahrzeug (2) erfolgt.

10. Verfahren nach einem der Ansprüche 1 bis 9, **dadurch gekennzeichnet, daß** bei der Herstellung der Fahrberechtigung für das motorangetriebene Kraftfahrzeug (2) nach der Aktivierung der Signalübertragung von der Übertragungseinheit (6) ein zweites, den Innenbereich (20) des motorangetriebenen Kraftfahrzeugs (2) erfassendes Fahrzeugsignal mit einer bestimmten Sendeleistung (P2) ausgesendet wird, und daß ein Startvorgang des Motors des motorangetriebenen Kraftfahrzeugs (2) durchgeführt wird, wenn ein vom Authentikations-Geber (3) zurückgesendetes Echosignal als Schlüsselsignal in der Übertragungseinheit (6) eintrifft und authentifiziert wurde.

11. Verfahren nach Anspruch 10, **dadurch gekennzeichnet, daß** die Aktivierung der Signalübertragung durch die Betätigung eines im motorangetriebenen Kraftfahrzeug (2) angeordneten Betätigungselements (4) erfolgt.

12. Verfahren nach Anspruch 11, **dadurch gekennzeichnet, daß** die Aktivierung der Signalübertragung durch die Betätigung eines am Armaturenbrett (8) des motorangetriebenen Kraftfahrzeugs (2) angeordneten Start-Stop-Tasters (4) erfolgt.

13. Verfahren nach einem der Ansprüche 1 bis 12, **dadurch gekennzeichnet, daß** beim Verlassen des motorangetriebenen Kraftfahrzeugs (2) nach der Aktivierung der Signalübertragung von der Übertragungseinheit (6) ein drittes, den Außenbereich (21) des motorangetriebenen Kraftfahrzeugs (2) erfassendes Fahrzeugsignal mit einer bestimmten Sendeleistung (P3) und ein viertes, den Innenbereich (22) des motorangetriebenen Kraftfahrzeugs (2) erfassendes Fahrzeugsignal mit einer geringeren Sendeleistung (P4) als der Sendeleistung (P3) des dritten Fahrzeugsignals ausgesendet wird, und daß ein Schließvorgang der Fahrzeugtüren (5) durchgeführt wird, wenn aufgrund des vierten Fahrzeugsignals vom Authentikations-Geber (3) kein Echosignal als Schlüsselsignal in der Übertragungseinheit (6) eintrifft und wenn ein aufgrund des dritten Fahrzeugsignals vom Authentikations-Geber (3) zurückgesendetes Echosignal als Schlüsselsignal (SS) in der Übertragungseinheit (6) eintrifft und authentifiziert wurde.

14. Verfahren nach Anspruch 13, **dadurch gekennzeichnet, daß** die Aktivierung der Signalübertragung durch die Betätigung eines im oder am Türgriff (18) einer Fahrzeugtüre (5) angeordneten Tasters (16) erfolgt.

15. Verfahren nach Anspruch 13, **dadurch gekennzeichnet, daß** die Aktivierung der Signalübertragung durch das Ausgangssignal eines in oder an der Fahrzeugtüre (5) angebrachten Türsensors erfolgt.

## Claims

1. A process for starting a motor-driven vehicle (2), in which at least one procedure is conducted using a bidirectional signal transmission of coded transmission signals (FS, SS) between the motor-driven vehicle (2) and an authorisation article (3) carried by the user (1) of the motor-driven vehicle (2), wherein in case of a user command for carrying out a procedure at startup
a) signal transmission is activated by the start signal of an activation element (4, 12, 16) arranged in or on the motor-driven vehicle (2),
b1) following activation of signal transmission by a transmitter (6) arranged in the vehicle (2) at least one vehicle signal is sent,
c) by way of the echo signals returned from the authorisation article (3) to the transmitter (6) as key signals the position of the authorisation article (3) is determined with respect to the motor-driven vehicle (2) and authentication is made,
this process being **characterised in that**
b2) the vehicle signal is sent with a transmitting power (P1, P2, P3, P4) dependent on the procedure to be carried out, and that
d) the procedure to be carried out is executed if the position of the authorisation article (3) corresponds to preset criteria and authentication of the authorisation article (3) was made successfully.

2. The process as claimed in Claim 1, **characterised in that** through the transmitting power (P1, P2, P3, P4) of the at least one vehicle signal permissible regions (19, 20, 21, 22) are established for the position of the authorisation article (3) with respect to the motor-driven vehicle (2).

3. The process as claimed in Claim 1 or 2, **characterised in that** the decision to conduct the procedure to be carried out is made by the transmitter (6) and/or by a controller (7) connected to the transmitter (6).

4. The process as claimed in Claim 3, **characterised in that** the decision to conduct the procedure to be carried out is made by an electronic engine immobiliser (7) connected to the transmitter (6).

5. The process as claimed in any one of Claims 1 to 4, **characterised in that** the start signal of the activation element is initiated by activity occurring on or in the vehicle (1), signalling a user command.

6. The process as claimed in any one of Claims 1 to 5, **characterised in that** bidirectional signal transmission between the transmitter (6) and the authorisation article (3) takes place via a radio transmission network (13).

7. The process as claimed in any one of Claims 1 to 6, **characterised in that** as access is made to the motor-driven vehicle (2) following activation of signal transmission by the transmitter (6) a first vehicle signal detecting the outer region (19) of the motor-driven vehicle (2) is sent with a specific transmitting power (P1), and **in that** an opening procedure of the vehicle doors (5) is executed, if an echo signal returned by the authorisation article (3) reaches the transmitter (6) as a key signal and was authenticated.

8. The process as claimed in Claim 7, **characterised in that** activation of the signal transmission occurs via actuation of the door handle (18) of a vehicle door (5).

9. The process as claimed in Claim 7, **characterised in that** activation of the signal transmission occurs as the user (1) approaches the motor-driven vehicle (2).

10. The process as claimed in any one of Claims 1 to 9, **characterised in that** when authorisation is given for the motor-driven vehicle (2) to be driven following activation of the signal transmission by the transmitter (6) a second vehicle signal detecting the inner region (20) of the motor-driven vehicle (2) is sent with a specific transmitting power (P2), and **in that** a startup procedure of the motor of the motor-driven vehicle (2) is executed if an echo signal returned by the authorisation article (3) reaches the transmitter (6) as a key signal and was authenticated.

11. The process as claimed in Claim 10, **characterised in that** activation of the signal transmission occurs via actuation of an actuation element (4) arranged in the motor-driven vehicle (2).

12. The process as claimed in Claim 11, **characterised in that** activation of the signal transmission occurs via actuation of a start-stop key (4) arranged on the dashboard (8) of the motor-driven vehicle (2).

13. The process as claimed in any one of Claims 1 to 12, **characterised in that** when the user exits from the motor-driven vehicle (2) following activation of signal transmission by the transmitter (6) a third vehicle signal detecting the outer region (21) of the motor-driven vehicle (2) is sent with a specific transmitting power (P3) and a fourth vehicle signal detecting the inner region (22) of the motor-driven vehicle (2) is sent with a lesser transmitting power (P4) than the transmitting power (P3) of the third vehicle signal, and **in that** a closing procedure of the vehicle doors (5) is executed if no echo signal reaches the transmitter (6) from the authorisation article (3) as a key signal due to the fourth vehicle signal, and if an echo signal sent as a key signal (SS) reaches the transmitter (6) and was authenticated due to the third vehicle signal from the authorisation article (3).

14. The process as claimed in Claim 13, **characterised in that** activation of the signal transmission occurs via actuation of a key (16) arranged in or on the door handle (18) of a vehicle door (5).

15. The process as claimed in Claim 13, **characterised in that** activation of the signal transmission occurs via the start signal of a door sensor arranged in or on the vehicle door (5).

## Revendications

1. Procédé de mise en marche d'un véhicule automobile à moteur (2) lors de laquelle au moins un processus est effectué avec utilisation d'une transmission de signal bidirectionnelle de signaux de transmission (FS, SS) codés entre le véhicule automobile à moteur (2) et un transmetteur d'authentification (3) porté par l'opérateur (1) du véhicule automobile à moteur (2), en cas de souhait de l'opérateur en vue de la réalisation d'un processus lors de la mise en marche
a) la transmission de signal étant activée par le signal de sortie d'un élément d'activation (4, 12, 16) disposé dans ou sur le véhicule automobile à moteur (2),
b1) après l'activation de la transmission de signal, au moins un signal de véhicule étant émis par une unité de transmission (6) disposée dans le véhicule automobile (2),
c) la position du transmetteur d'authentification (3) par rapport au véhicule automobile à moteur (2) étant déterminée à l'aide des signaux de l'écho renvoyés, en tant que signaux de clé, par le transmetteur d'authentification (3) à l'unité de transmission (6)
et une authentification étant entreprise,
ce procédé est **caractérisé en ce que**
b2) le signal de véhicule est émis avec une puissance d'émission (P1, P2, P3, P4) qui dépend du processus à mettre en oeuvre, et **en ce que**
d) le processus à mettre en oeuvre est exécuté quand la position du transmetteur d'authentification (3) correspond à des critères prédéfinis, et quand l'authentification du transmetteur d'authentification (3) a été entreprise avec succès.

2. Procédé selon la revendication 1, **caractérisé en ce que** la puissance d'émission (P1, P2, P3, P4) du signal de véhicule, au moins au nombre de un, détermine des zones admissibles (19, 20, 21, 22) pour la position du transmetteur d'authentification (3) par rapport au véhicule automobile à moteur (2).

3. Procédé selon la revendication 1 ou 2, **caractérisé en ce que** la décision concernant l'exécution du processus à mettre en oeuvre est prise par l'unité de transmission (6) et/ou par une unité de commande (7) raccordée à l'unité de transmission (6).

4. Procédé selon la revendication 3, **caractérisé en ce que** la décision concernant l'exécution du processus à mettre en oeuvre est prise par un système antidémarrage électronique (7) raccordé à l'unité de transmission (6).

5. Procédé selon une des revendications 1 à 4, **caractérisé en ce que** le signal de sortie de l'élément d'activation est initié par une activité signalant un souhait de l'opérateur et intervenant sur ou dans le véhicule (1).

6. Procédé selon une des revendications 1 à 5, **caractérisé en ce que** la transmission bidirectionnelle intervient entre l'unité de transmission (6) et le transmetteur d'authentification (3) via un circuit de transmission radio (13).

7. Procédé selon une des revendications 1 à 6, **caractérisé en ce que**, lors de l'accès au véhicule automobile à moteur (2), après l'activation de la transmission de signal, l'unité de transmission (6) émet un premier signal de véhicule saisissant la zone extérieure (19) du véhicule automobile à moteur (2) avec une puissance d'émission (P1) déterminée, et **en ce qu'**un processus d'ouverture des portes du véhicule (5) est effectué quand un signal de l'écho, en tant que signal de clé, renvoyé par le transmetteur d'authentification (3) arrive dans l'unité de transmission (6) et est authentifié.

8. Procédé selon la revendication 7, **caractérisé en ce que** l'activation de la transmission de signal intervient par l'actionnement de la poignée de porte (18) d'une porte de véhicule (5).

9. Procédé selon la revendication 7, **caractérisé en ce que** l'activation de la transmission de signal intervient lorsque l'opérateur (1) s'approche du véhicule automobile à moteur (2).

10. Procédé selon une des revendications 1 à 9, **caractérisé en ce que**, lors de la réalisation de l'autorisation de marche pour le véhicule automobile à moteur (2), après l'activation de la transmission de signal, l'unité de transmission (6) émet un deuxième signal de véhicule saisissant la zone intérieure (20) du véhicule automobile à moteur (2) avec une puissance d'émission (P2) déterminée, et **en ce qu'**un processus de démarrage du moteur du véhicule automobile à moteur (2) est effectué quand un signal de l'écho, en tant que signal de clé, renvoyé par le transmetteur d'authentification (3) arrive dans l'unité de transmission (6) et est authentifié.

11. Procédé selon la revendication 10, **caractérisé en ce que** l'activation de la transmission de signal intervient par l'actionnement d'un élément d'actionnement (4) disposé dans le véhicule automobile à moteur (2).

12. Procédé selon la revendication 11, **caractérisé en ce que** l'activation de la transmission de signal intervient par l'actionnement d'une touche marche-arrêt (4) disposée sur la planche de bord (8) du véhicule automobile à moteur (2).

13. Procédé selon une des revendications 1 à 12, **caractérisé en ce que**, lors de l'abandon du véhicule automobile à moteur (2), après l'activation de la transmission de signal, l'unité de transmission (6) émet un troisième signal de véhicule saisissant la zone extérieure (21) du véhicule automobile à moteur (2) avec une puissance d'émission (P3) déterminée, et émet un quatrième signal de véhicule saisissant la zone intérieure (22) du véhicule automobile à moteur (2) avec une puissance d'émission (P4) plus faible que la puissance d'émission (P3) du troisième signal de véhicule, et **en ce qu'**un processus de fermeture des portes du véhicule (5) est effectué quand, en raison du quatrième signal de véhicule, aucun signal de l'écho, en tant que signal de clé, ne parvient dans l'unité de transmission (6) en provenance du transmetteur d'authentification (3) et quand, un signal de l'écho, en tant que signal de clé (SS), renvoyé par le transmetteur d'authentification (3) du fait du troisième signal de véhicule, parvient dans l'unité de transmission (6) et est authentifié.

14. Procédé selon la revendication 13, **caractérisé en ce que** l'activation de la transmission de signal intervient par l'actionnement d'une touche (16) disposée dans ou sur la poignée de porte (18) d'une porte de véhicule (5).

15. Procédé selon la revendication 13, **caractérisé en ce que** l'activation de la transmission de signal intervient par le signal de sortie d'un capteur de porte installé dans ou sur la porte de véhicule (5).
